(19) Europäisches Patentamt
European Patent Office
Office européen des brevets

(11) Publication number: 0 124 253
B1

(12) **EUROPEAN PATENT SPECIFICATION**

(45) Date of publication of patent specification: **16.08.90**

(51) Int. Cl.$^5$: **A 01 N 25/02,** A 01 N 47/34

(21) Application number: **84302082.7**

(22) Date of filing: **27.03.84**

(54) **Agricultural compositions, methods of preparing agricultural compositions, and methods of using agricultural compositions.**

(30) Priority: **30.03.83 GB 8308749**

(43) Date of publication of application:
**07.11.84 Bulletin 84/45**

(45) Publication of the grant of the patent:
**16.08.90 Bulletin 90/33**

(84) Designated Contracting States:
**BE DE FR IT NL SE**

(56) References cited:
**EP-A-0 055 213**
**FR-A-2 448 293**

(73) Proprietor: **THE DOW CHEMICAL COMPANY**
**2030 Dow Center Abbott Road P.O. Box 1967**
**Midland Michigan 48640-1967 (US)**

(72) Inventor: **Mulqueen, Patrick Joseph**
**16 Willow Road South Wootton**
**King's Lynn Norfolk (GB)**

(74) Representative: **Raynor, John et al**
**W.H. Beck, Greener & Co 7 Stone Buildings**
**Lincoln's Inn**
**London WC2A 3SZ (GB)**

**EP 0 124 253 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to emulsifiable concentrate formulations, containing agricultural chemicals, in particular pesticides, for example, insecticides, or herbicides.

A number of pesticidal, (in particular insecticidal and herbicidal) substances are desirably utilised in the form of very small particles, preferably less than 10 microns in diameter, and more preferably less than 5 microns in diameter. Examples of such insecticidal substances are acyl urea (which term as used herein includes acyl thiourea) insect growth regulators, for example diflubenzuron, which are used extensively for the control of the mixed pest population including the many lepidopterus species, and whitefly, which are generally known as the cotton pest complex. Many such compounds are notoriously insoluble in water, and thus, to provide the bulk necessary for efficient field application, must be formulated into some form of dispersion in water.

Generally, the approach adopted with such insoluble compounds in the past has been the formulation of wettable powders, in particular for mixtures of acyl ureas with other insecticides, for example, because of the poor solubility of acyl urea in conventinal solvents used in the preparation of emulsifiable concentrates.

Improvements in formulation technology have resulted in liquid formulations being developed wherein the acyl urea is suspended in an emulsifiable concentrate, which may contain an additional pesticide component, for example chlorpyrifos. Other aqueous suspension concentrates, together with appropriate emulsifiers are also known. Such formulations are prepared so as to produce a small particle size for the acyl urea, e.g. less than 5 microns.

One of the limitations on the utility of suspension concentrate formulation is the solubility of the suspended active pesticide in the formulation. In order to ensure that over the period of shelf-life of a product, normally at least two years, the physical performance of the product does not vary, the solubility of the suspended active product in the solvent system should be as low as possible, preferably less than 100 ppm (parts per million active product in solvent). Should the solubility be excessive, crystal growth will be observed in the concentrate (known as Ostwald ripening), leading to physical disruption of the suspension concentrate. With products such as the acyl urea insecticides which are dependent upon a small particle size for optimum biological activity, the need to minimize this Ostwald ripening is very important, and careful choice of solvent systems is necessary. Even in pesticide systems in which particle size is not so important as in the acyl ureas, it is believed that particle sizes of less than 10 microns may be important in providing increased utility, and the same has been found for certain sparingly soluble herbicides.

For some acyl ureas, when a mixture is required comprising the acyl urea with another pesticide, the solvent system for such suspension concentrate gives solubilities of acyl ureas which are too high for a satisfactory suspension formulation because they give rise to Ostwald ripening, and yet are insufficient to produce conventional emulsifiable concentrates.

The production of effective emulsifiable concentrates from highly water insoluble agricultural compounds, e.g., the acyl ureas, has in the past been very difficult. Very polar solvents are necessary in addition to the non-polar solvent forming the dispersed phase of the emulsion in order to maintain such compounds in solution in concentrations suitable for shipment and storage. However, when such concentrates are emulsified by addition to water, in preparation for their use, the active compound tends to crystallize from the emulsions produced. This crystallisation tends to produce particles of the active compound having a size larger than that required for optimum biological activity. It is a relatively easy matter to include in an emulsifiable concentrate composition appropriate emulsifiers so that the initial droplet size is within the desired range. However, on dilution, the emulsion particles tend to coalesce, to produce particles of the active compound having an undesirably large size.

We have now found that if certain additives, which are soluble in the combination of polar and nonsolvents and remain in the dispersed phase on emulsification of the concentrate to form a solid or semi-solid matrix, are formulated into the emulsifiable concentrates of such agricultural compositions. It is possible to control the crystal growth of insoluble compounds such as acryl ureas and other agricultural compounds and thereby maintain the particle size of such pesticides at or near the optimum biologically active size.

According to this invention, there is provided an emulsifiable concentrate composition which composition comprises a miscible combination of a polar solvent and a non-polar solvent,

an agriculturally effective compound, for example a pesticide such as insecticide or herbicide, which is at most only sparingly soluble in water, but which is soluble in the combination of polar and non-polar solvents,

at least one emulsifier such as to cause or permit an emulsification of the concentrate with water the formation of an emulsion having an average droplet size not exceeding 10 microns, and

a polymeric material selected from ethyl cellulose, ethyl hydroxyethyl cellulose, and cellulose acetate butyrate, which is soluble in the combination of polar and non-polar solvents and adapted to remain within the dispersed phase on emulsification of the concentrate and to form a solid or semi-solid matrix to prevent coalescence of the emulsion particles.

The preferred polymeric materials are ethyl cellulose and ethyl hydroxyethyl cellulose, for example

those sold under the Trade Mark ETHOCEL. Preferred ethyl cellulose materials may contain from 2.0 to 2.6 ethoxyl groups per anhydroglucose unit, for example those sold under the Trade Mark ETHOCEL, and having a viscosity of from 3 to 300 cp, preferably approximately 10 cp (measured as a 5% w/w solution in a mixture of 80:20 toluene: ethanol w/w). Particularly preferred are the products sold under the Trade Mark ETHOCEL containing from 2.25 to 2.58 ethoxy groups per anhydroglucose unit, corresponding to an "ethoxy" content of from 45.0% to 49.5%. The polymeric material is preferably incorporated in an amount of from 0.1 to 10%, preferably from 0.1 to 5%, more preferably from 0.5 to 2% by weight of the emulsifiable concentrate.

The mechanism by which such polymeric materials prevent coalescence is believed to be as follows. On initial emulsion formation, droplets are formed of the concentrate material. On standing, the polar solvent migrates into the aqueous phase, decreasing the solubility of both active material, and the polymeric material. If no polymeric material is present, microcrystals of the acyl urea form in the liquid droplets and grow as liquid droplets coalesce.

In the presence of the polymeric material, however, a matrix of the polymeric material is formed within or around the droplets, before significant coalescence of the droplets can occur. It is therefore important that the solubility of the polymeric material in the non-polar solvent should be such that matrix formation occurs before substantial crystallisation of the pesticidal material.

The choice of an appropriate polymeric material may be made bearing in mind the respective solubilities of the material and of the pesticide in the solvents utilised. Suitable materials are cellulose acetate butyrate (CAB), ethyl cellulose and ethylhydroxy ethyl cellulose. Methyl cellulose has however been shown to be ineffective, and it is believed that this is due to its preferential solubility in the aqueous phase with respect to the non-polar solvent.

Suitable polar solvents for use in the concentrate are highly polar solvents such as N-methylpyrrolidone, dimethylformamide, dimethylsulphoxide, isophorone, cyclohexanone and acetone. The solvent used must be an effective solvent for the active material and also for the polymeric additive.

A sufficient amount of the polar solvent must be employed to maintain the insoluble pesticide and the polymeric material in solution. The amount used will therefore vary depending on the nature and amount of those materials, and in particular on the nature and amount of the insoluble pesticide.

Generally, the amount used will fall in the range of from 1 to 80%, more usually from 5 to 40%, preferably from 10 to 25% by weight of the emulsifiable concentrate composition.

Suitable non-polar solvents are those conventionally used in pesticide formulations and include aromatic solvents such as xylene or mixed naphthalene fractions, dioctyl phthallate, chlorinated hydrocarbons, aliphatic solvents such as kerosene, mineral oils, polybutenes, glycol ethers and their mixtures or any other appropriate solvent. The preferred solvent is xylene.

There is no particular restriction on the amount of the non-polar solvent which should be employed, and in general this will amount to the balance of the compositions, sufficient to make the composition up to the desired volume. Generally, the non-polar solvent will amount to from 5 to 90% by weight of the composition.

The emulsifiers to be used can be chosen from the range of anionic, nonionic and cationic emulsifiers available and well-known to those skilled in the art. Suitable list for references may be found in "McCutcheon's Emulsifiers and Detergents" (1981 Edition). Examples of anionic surfactants are the calcium and amine salts of dodecylbenzene sulphonic acid and sodium diisooctylsulphosuccinate. Examples of nonionic surfactants are the condensation products of fatty acid esters, fatty alcohols, fatty acid amides or fatty amines with ethylene and/or propylene oxide, alkyl-, alkenyl, or polyaryl-substituted phenols with ethylene and/or propylene oxide, fatty esters of polyhydric alcohol ethers e.g. sorbitan fatty acid esters, condensation products of such esters with ethylene oxide, e.g. polyoxyethylene sorbitan fatty acid esters, block copolymers of ethylene oxide and propylene oxide, ethoxylated lanolin alcohols or ethoxylated lanolin acids. Examples a of cationic agent include, for instance, an aliphatic mono-, di- or polyamine as an acetate or oleate.

Anionic/nonionic blends are preferred and are often advantageously chosen as preblended systems for ease of handling, reproducibility and cost effectiveness. Such systems are well known to those in skilled in the art and include TENSIOFIX® BS and CS, ATLOX® 4855B and 4851B. (TENSIFLEX and ATLOX are Trade Marks).

The emulsifier or emulsifier blend is chosen such as to produce on emulsification of the concentrate an emulsion having a droplet size not exceeding 10 microns, and preferably not exceeding 5 microns. The choice of suitable emulsifiers to achieve this is well within the capabilities of one skilled in the art.

The amount of emulsifier will generally be in the range of from 1 to 50%, preferably from 5 to 20%, more preferably from 7 to 15% by weight of the composition.

As indicated above, compositions according to the invention are particularly valuable when the compound at most only sparingly soluble in water is an acyl urea, which term, as indicated above, is intended to include acyl thioureas.

Particularly suitable compounds are compounds of the formula

R. CO. NH. CX. NH. R' (I)

X is Oxygen or Sulphur, and R and R' are each independently an optionally substituted aromatic or heteraromatic group, preferably X is Oxygen and R is optionally substituted phenyl or pyridyl, or prizinyl, more preferably, both R and R' are optionally substituted phenyl, although in general any of the known acyl ureas may be employed. Particular examples are described in British Patent Specification Nos. 1,324,293; 1,501,607; and 1,575,799; German Patent Specification No. 2,926,480 and in U.S. Patents Nos. 4,148,902; 4,173,637 and Reissue 30563, and summarised in British Patent Specification 2,082,913A, and all those compounds indicated in British Patent Specification No. 2,082,913A as preferred are considered in the compositions of the present invention.

In particular, preferred acyl ureas are:

(a) 1-[4-(2,2-dichloro-1,1-difluoroethoxy)phenyl]-3-(2-chlorobenzoyl urea.

(b) 1-(4-trifluoromethoxyphenyl)-3-(2-chlorobenzoyl urea.

(c) 1-(4-chlorophenyl)-3-(2,6-difluorobenzoyl) urea.

(d) 1-[3,5-dichloro-4-(2-chloro-1,1-difluoroethoxy)phenyl]-3-(2,6-difluorobenzoyl) urea.

(e) 1-[3,5-dichloro-4-(2,2-dichloro-1,1-difluoroethoxy)phenyl]-3-(2-chlorobenzoyl) urea.

(f) 1-[3,5-dichloro-4-((5-trifluoromethyl)-3-chloro-2-pyridyloxy)-phenyl]-3-(2,6-difluorobenzoyl) urea.

(g) 1-[3,5-dichloro-4-(1,1,2,2-tetrafluoroethoxy)-phenyl]-3-(2,6-difluorobenzoyl) urea.

The aforesaid acyl ureas were preferably utilised in an amount of from 0.1 to 20%, more preferably 0.5 to 10%, still more preferably from 1 to 6% by weight of the emulsifiable concentrate composition.

When other somewhat less insoluble pesticides are utilised, for example, herbicides as hereinafter exemplified, the amount utilised may be as high as 60% or 70% by weight of the composition.

The compositions according to the invention may preferably comprise one or more additional pesticide components, for example organophosphorus, pyrethroid or carbamate insecticides. Furthermore, one or other of the polar and non-polar solvents may itself have pesticidal properties. For example, the non-polar solvent may be a pesticidal compound which is a liquid at normal temperatures such as malathion.

Suitable additional pesticide components for acyl ureas are any pesticides which fit biologically to control the various pests present in the pest complex. Examples of such pesticides are chlorpyrifos, chlorpyrifos-methyl, cypermethrin, permethrin, lannate, triazophos, acephate, parathion, malathion, sulprofos, mephospholan, mecarbam and phospholan.

Preferred pesticides are chlorpyrifos, chlorpyrifos-methyl and cypermethrin.

The amount of the additional pesticide may vary within wide limits depending upon its nature. For example, when the additional pesticide is a liquid such as malathion. It will fulfil a function as a non-polar solvent, and thus relatively large amounts may be employed. In general, the amount of the additional pesticide, when used, will be generally from 0.1 to 90%, preferably from 1 to 60%, more preferably from 5 to 50% by weight of the composition.

The compositions of the invention may in addition comprise one or more agronomically acceptable diluents.

The invention provides emulsifable concentrates possessing the following advantages:

(i) ease of preparation.

(ii) control of particle size for optimum biological efficacy.

(iii) ease of dilution and application under adverse field conditions consistent with normal emulsifiable concentrate advantages.

The invention is illustrated by the following examples:

## Example 1

An emulsifiable concentrate formulation was prepared containing 480 g/litre chlorpyrifos and 30 g/litre 1-[4-(2,2-dichloro-1,1-difluoroethoxy)phenyl]-3-(2-chlorobenzoyl urea using N-methyl-pyrrolidone as a polar solvent and xylene as non-polar co-solvent. The formulation details were as follows.

ETHOCEL® S.10 (ethyl cellulose produced by Dow Chemical Company and having a mean viscosity designation of 10 cp, measured as a 5% w/w solution in 80:20 w/w toluene-ethanol) was dissolved in N-methyl pyrrolidone by vigorous stirring and the acyl urea was dissolved in the solution. Emulsifiers and molten chlorpyrifos were then added in the proportions given below and xylene to make up to 1 litre

(approximately 1120 g). The amount of Ethocel® S.10 was such as to produce a concentration of 10 g/litre in the concentrate.

| | |
|---|---|
| Chlorpyrifos | 480 g/litre |
| acyl urea | 30 g/litre |
| N-methyl pyrrolidone | 150 g/litre |
| calcium dodecyl benzene sulphonate (emulsifier) | 30 g/litre |
| ethoxylated octyl phenol (emulsifier) | 30 g/litre |
| ethoxylated poly aryl phenyl (emulsifier) | 40 g/litre |

Thus, a storage-usable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (2 to 3 microns), showing the acyl urea particle size to be below this figure.

It could therefore be seen that the ethyl cellulose had formed a semi-solid matrix within the emulsion droplets to prevent them from coalescing. The emulsion droplets thus contained the acyl urea, chlorpyrifos, and xylene in a matrix of ethyl cellulose, the matrix thus preventing crystal growth of the acyl urea through the emulsion oil/water interface. The emulsion drop size was of the order 2—3 microns showing the acyl urea particle size to be below this figure.

Comparative Example 1

Example 1 was repeated, except that the ETHOCEL S.10 was omitted. When the composition was emulsified and allowed to stand, the acyl urea was crystallised and fell to the bottom. The crystalline fraction was collected, washed with water and suspended in electrolyte solution. The particle size distribution was then measured with the Coulter Counter® Model TA II. (Coulter Counter is a Trade Mark).

The particles showed a mass median diameter (in microns) of between 8 and 9 microns with more than 60% w/w greater than 5 microns.

Comparative Example 2

Example 1 was repeated, using a methyl cellulose METHOCEL MC 25 cps grade instead of ethyl cellulose.

The composition was found on dilution in water to exhibit the same properties as the composition of comparative Example 1, and a crystalline precipitate of relatively large particle size was observed. It is believed that the reason for the failure to produce the desired result in this example was due to the preferential solubility of the methyl cellulose in water rather than xylene, which resulted in no protective matrix being formed.

Example 2

One litre (approximately 1120 g) of an emulsifiable concentrate containing 1-[4-(2,2-dichloro-1,1-difluoroethoxy)phenyl]-3-(2-chloro-benzoyl urea (30 g/litre) and chlorpyrifos (480 g/litre) was prepared using N-methyl pyrrolidone as a polar solvent and xylene as non-polar solvent.

The emulsifiable concentrate was formulated as in Example 1 but employing ETHOCEL® S.4 (ethyl cellulose having a mean viscosity designation of 4 cp, measured as a 5% w/w solution in 80:20 w/w toluene:ethanol) instead of ETHOCEL® S.10.

Thus, a storage-stable emulsifier concentrate was produced.

The emulsifible concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 3

An emulsifiable concentrate containing 1-[4-(2,2-dichloro-1,1-difluoroethoxy)phenyl]-3-(2-chloro-benzoyl urea (30 g/litre) and chlorpyrifos (480 g/L) was prepared using N-methyl pyrrolidone as a polar solvent and xylene as a non-polar solvent.

The formulation details were as follows:

ETHOCEL® M.50 (Ethyl cellulose having a mean viscosity designation of 50 cp, measured as a 5% w/w

solution in 60:40 w/w toluene:ethanol) was dissolved in N-methyl pyrrolidone by vigorous stirring and the acyl urea dissolved in the solution. Emulsifiers and molten chlorpyrifos were then added in the proportions given below and xylene to make up to 1 litre (approximately 1120 g). The amount of ETHOCEL® M.50 was such as to produce a concentration of 10 g/litre in the concentrate.

| | |
|---|---|
| chlorpyrifos | 480 g/litre |
| acyl urea | 30 g/litre |
| N-methyl pyrrolidone | 150 g/litre |
| Calcium dodecyl benzene sulphonate (emulsifier) | 30 g/litre |
| Ethoxylated nonyl phenol (emulsifier) | 30 g/litre |
| Ethoxylated castor oil (emulsifier) | 40 g/litre |

Thus, a storage-usable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 4

One litre (approximately 1120 g) of an emulsifiable concentrate was prepared as in Example 1 but employing ETHOCEL® HE 10 (ethyl cellulose having a mean viscosity designation of 10 cp, measured as a 5% w/w solution in 80:20 w/w toluene:ethanol) instead of ETHOCEL® S.10.

Thus, a storage-stable emulsifier concentrate was produced.

The emulsifible concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 5

An emulsifiable concentrate was prepared as in Example 3 but employing cellulose acetobutyrate instead of ETHOCEL® M.50.

Thus, a storage-stable emulsifier concentrate was produced.

The emulsifible concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Examples 6—8 show different acyl ureas in combination with chlorpyrifos.

Example 6

An emulsifiable concentrate containing 1-(4-chlorophenyl)-3-(2,6-difluorobenzoyl) urea (10 g/litre) and chlorpyrifos (480 g/litre) was prepared using N-methyl pyrrolidone as a polar solvent and xylene as non-polar co-solvent.

An emulsifiable concentrate composition was formulated as in Example 1, using ETHOCEL® S.10. This was dissolved in N-methyl pyrrolidone by vigorous stirring and the acyl urea dissolved in the solution. Emulsifiers and molten chlorpyrifos were then added in the proportions given below and xylene to make

up to 1 litre (approximately 1115 g). The amount of ETHOCEL S.10 was such as to produce a concentration of 10 g/litre in the emulsifiable concentrate.

| | |
|---|---|
| chlorpyrifos | 480 g/litre |
| acyl urea | 10 g/litre |
| N-methyl pyrrolidone | 180 g/litre |
| Calcium dodecyl benzene sulphonate (emulsifier) | 30 g/litre |
| Ethoxylated octyl phenol (emulsifier) | 30 g/litre |
| Ethoxylated polyaryl phenyl (emulsifier) | 40 g/litre |

Thus, a storage-usable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 7

One litre (approximately 1118 g) of an emulsifiable concentrate containing 1-[3,5-dichloro-4-((5-trifluoromethyl-3-chloro-2-pyridyloxy)-phenyl]-3-(2,6-difluorobenzoyl) urea (20 g/litre) and chlorpyrifos (480 g/litre) was prepared using N-methyl pyrrolidone as a polar solvent and xylene as a non-polar solvent.

The composition was formed as in Example 6 but replacing the acyl urea of Example 6 with that above.

No crystalline acyl urea could be separated and microscopic examination indicated the presence of no particles with a size greater than that of the emulsion droplets (1 to 3 microns), showing the acyl urea particle size to be below this figure.

Example 8

One litre (approximately 1120 g) of an emulsifiable concentrate containing 1-[3,5-dichloro-4-(1,1,2,2-tetrafluoroethoxy phenyl]-3-(2,6-difluorobenzoyl) urea (30 g/litre) and chlorpyrifos (480 g/litre) was prepared using N-methyl pyrrolidone as a polar solvent and xylene as a non-polar solvent.

The composition was formed as in Example 6 but replacing the acyl urea of Example 6 with that above. Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 9

An emulsifiable concentrate containing 1-[4-(2,2-dichloro-1,1-difluoroethoxy)phenyl]-3-(2-chlorobenzoyl urea (30 g/litre) and chloropyrifos (480 g/litre) was prepared using dimethyl formamide as a polar solvent and xylene as a non-polar solvent.

ETHOCEL® S.10 was dissolved in dimethyl formamide by vigorous stirring and the acyl urea was dissolved in the solution. Emulsifiers and molten chlorpyrifos were then added in the proportions given

below and xylene to make up to a 1 litre (approximately 1120 g). The amount of ETHOCEL S.10 was such as to produce a concentration of 10 g/litre in the concentrate:

| | |
|---|---|
| chlorpyrifos | 430 g/litre |
| acyl urea | 30 g/litre |
| dimethyl formamide | 150 g/litre |
| Calcium dodecyl benzene sulphonate (emulsifier) | 30 g/litre |
| Ethoxylated octyl phenol (emulsifier) | 30 g/litre |
| Ethoxylated polyaryl phenol (emulsifier) | 40 g/litre |

Thus, a storage-usable emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 10

An emulsifiable concentrate containing 1-[4-(2,2-dichloro-1,1-difluoroethoxy)phenyl]-3-(2-chlorobenzoyl urea (30 g/litre) and chlorpyrifos (480 g/litre) was prepared using dimethylsulphoxide as a polar solvent and xylene as a non-polar solvent.

ETHOCEL® S.10 was dissolved in dimethylsulphoxide by vigorous stirring and the acyl urea dissolved in the solution. Emulsifiers and molten chlorpyrifos were then added in the proportions given below and xylene to make up to 1 litre (approximately 1120 g). The amount of ETHOCEL® S.10 was such as to produce a concentration of 10 g/litre in the concentrate:

| | |
|---|---|
| chlorpyrifos | 480 g/litre |
| acyl urea | 30 g/litre |
| dimethyl sulphoxide | 100 g/litre |
| Emulsifiers as Example 9 | 100 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 11

An emulsifiable concentrate containing 1-[3,5-dichloro-4-(1,1,2,2-tetrafluoroethoxy)phenyl]-3-(2,6-difluorobenzoyl) urea (30 g/litre) and chlorpyrifos (480 g/litre) was prepared using isophorone as a polar solvent and xylene as a non-polar solvent.

ETHOCEL® S.10 was dissolved in isophorone by vigorous stirring and the acyl urea was dissolved in the solution. Emulsifiers and molten chlorpyrifos were then added in the proportions given below and

xylene to make up to 1 litre (approximately 1140 g). The amount of ETHOCEL® S.10 was such as to produce a concentration of 10 g/litre in the concentrate:

| | |
|---|---|
| chlorpyrifos | 480 g/litre |
| acyl urea | 30 g/litre |
| isophorone | 250 g/litre |
| Calcium dodecyl benzene sulphonate (emulsifier) | 20 g/litre |
| Ethoxylate alkyl phenol (emulsifier) | 30 g/litre |
| Ethoxylate castor oil (emulsifier) | 50 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Examples 12 and 13 illustrate use of different pesticides in combination with acyl urea insecticide.

Example 12

An emulsifiable concentrate containing 1-[4-(2,2-dichloro-1,1-difluoroethoxy)phenyl]-3-(2-chlorobenzoyl) urea (30 g/litre) and chlorpyrifos-methyl (480 g/litre) was prepared using N-methyl pyrrolidone as a polar solvent and xylene as a non-polar solvent.

ETHOCEL® S.10 was dissolved in N-methyl pyrrolidone by vigorous stirring and the acyl urea was dissolved in the solution. Emulsifiers and molten chlorpyrifos-methyl were then added in the proportions given and xylene to make up to 1 litre. The amount of ETHOCEL® S.10 was such as to produce a concentration of 10 g/litre in the concentrate.

| | |
|---|---|
| chlorpyrifos-methyl | 480 g/litre |
| acyl urea | 30 g/litre |
| N-methyl pyrrolidone | 150 g/litre |
| Emulsifiers (as Example 1) | 100 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Example 13

An emulsifiable concentrate containing 1-[3,5-dichloro-4-(1,1,2,2-tetrafluoroethoxy)phenyl]-3-(2,6-difluorobenzoyl) urea (30 g/litre) and cypermethrin (50 g/litre) was prepared using N-methyl pyrrolidone as a polar solvent and xylene as a non-polar solvent.

ETHOCEL® S.10 was dissolved in N-methyl pyrrolidone by vigorous stirring and the acyl urea was dissolved in the solution. Emulsifiers and cypermethrin were then added in the proportions given below

and xylene to make up to 1 litre (approximately 950 g). The amount of ETHOCEL® S.10 was such as to produce a concentration of 10 g/litre in the concentrate:

| | |
|---|---|
| cypermethrin | 50 g/litre |
| acyl urea | 30 g/litre |
| N-methyl pyrrolidone | 100 g/litre |
| Calcium dodecyl benzene sulphonate (emulsifier) | 40 g/litre |
| Ethoxylated castor oil (emulsifier) | 60 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 2 microns), showing the acyl urea particle size to be below this figure.

Example 14 illustrates the use of a non-polar solvent other than xylene.

Example 14

An emulsifiable concentrate containing 1-[4-(2,2-dichloro-1,1-difluoroethoxy)phenyl]-3-(2-chlorobenzoyl) urea (30 g/litre) and chlorpyrifos (480 g/litre) was prepared using N-methyl pyrrolidone as a polar solvent and a 1,1,1-trichloroethane/xylene mixture as a non-polar solvent.

ETHOCEL® S.10 was dissolved in N-methyl pyrrolidone by vigorous stirring and the acyl urea was dissolved in the solution. Emulsifiers and molten chlorpyrifos-methyl were then added in the proportions given below and 1,1,1-trichloroethane and xylene to make up to 1 litre (approximately 1200 g). The amount of ETHOCEL® S.10 was such as to produce a concentration of 10 g/litre in the concentrate.

| | |
|---|---|
| chlorpyrifos | 480 g/litre |
| acyl urea | 30 g/litre |
| N-methyl pyrrolidone | 150 g/litre |
| 1,1,1-trichloroethane | 250 g/litre |
| Emulsifiers (anionic/nonionic blend) | 100 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Examples 15 and 16 illustrate the invention without the addition of a second pesticide to the oil phase.

Example 15

An emulsifiable concentrate containing 1-[4-(2,2-dichloro-1,1-difluoroethoxy)phenyl]-3-(2-chlorobenzoyl) urea (50 g/litre) was prepared using a combination of cyclohexanone and dimethyl sulphoxide as polar solvents and xylene as non-polar solvent.

ETHOCEL® S.10 was dissolved in cyclohexanone and dimethyl sulphoxide by vigorous stirring and the acyl urea dissolved in the solution. Emulsifiers were added and xylene to make up to 1 litre (approximately

970 g). The amount of ETHOCEL® S.10 was such as to produce a concentration of 20 g/litre in the concentrate:

| | |
|---|---|
| Acyl urea | 50 g/litre |
| cyclohexanone | 200 g/litre |
| dimethyl sulphoxide | 200 g/litre |
| TENSIOFIX B7453 | 100 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 3 microns), showing the acyl urea particle size to be below this figure.

Comparative Example 3

Example 15 was repeated, omitting the ETHOCEL S.10.

When the concentrate was emulsified and allowed to stand for 24 hours at 30°C, a deposit of crystalline material identified as typical acyl urea crystals was seen. The crystals by microscope examination were estimated to have a particle size of 10 microns or greater.

Example 16

An emulsifiable concentrate containing 1-[3,5-dichloro-4-(1,1,2,2-tetrafluoroethoxy)phenyl]-3-(2,6-difluorbenzoyl) urea (50 g/litre) was prepared using a N-methyl pyrrolidone as polar solvent and xylene as non-polar solvent.

ETHOCEL® S.10 was dissolved in N-methyl pyrrolidone by vigorous stirring and the acyl urea was dissolved in the solution. Emulsifiers were added and xylene to make up to 1 litre (approximately 950 g). The amount of ETHOCEL® S.10 was such as to produce a concentration of 20 g/litre in the concentrate:

| | |
|---|---|
| Acyl urea | 50 g/litre |
| N-methyl pyrrolidone | 200 g/litre |
| anionic/nonionic emulsifier blend | 100 g/litre |

Thus, a storage-stable emulsifiable concentrate was produced.

The emulsifiable concentrate was tested by emulsification in standard hard water (342 ppm as $CaCO_3$) at 30°C and the emulsion was allowed to stand for 24 hours.

No crystalline acyl urea could be separated and microscopic examination indicated the presence of no particles with a size greater than that of the emulsion droplets (1 to 2 microns), showing the acyl urea particle size to be below this figure.

Example 14 illustrates the use of a non-polar solvent other than xylene.

Example 17

An emulsifiable concentrate was prepared of Acetic Acid: [(4-amino-3,5-dichloro-6-fluoro-2-pyridinyl)oxy]:1-methyl heptyl ester. This is a herbicide which is only very sparingly soluble in water, and which has been found to have increased effectiveness when a very small particle size is utilised.

The composition of the concentrate was as follows

| | |
|---|---|
| above herbicide | 534 g/litre |
| dimethyl formamide | 160 g/litre |
| ethoxylate castor oil | 110 g/litre |
| Calcium dodecyl benzene sulphonate | 45 g/litre |
| Ethocel S.10 | 20 g/litre |
| xylene | balance |

The composition was formulated by dissolving the herbicide in a mixture of the dimethyl formamide and xylene, adding the ETHOCEL® S.10, and then the remainder of the constituents. The composition was storage stable.

The emulsifiable concentrate composition was tested by emulsification in standard hard water (342 ppm $CaCO_3$) at 30°C and 1% v/v dilution, and allowed to stand for 8 hours. No crystals bigger than the emulsion droplet size (less than 1 micron) were observed.

Comparative Example 4

Example 17 was repeated, omitting the ETHOCEL® S.10.

On emulsification gross crystallisation was observed on microscopic examination.

## Claims

1. An emulsifiable concentrate composition which composition comprises

a miscible combination of a polar solvent and a non-polar solvent,

an agriculturally effective compound which is at most only sparingly soluble in water, but which is soluble in the combination of polar and non-polar solvents,

at least one emulsifier wherein the emulsifier is of such a nature and present in such an amount as to cause or permit an emulsification of the concentrate with water the formation of an emulsion having an average droplet size not exceeding 10 microns, characterised in that the composition also comprises

a polymeric material, which is ethyl cellulose, ethylhydroxyethyl cellulose, or cellulose acetate butyrate, in that the polar solvent is one in which the said polymeric material is soluble, and in that the said polymeric material and polar solvent are present in such amounts that the polymeric material remains within the dispsersed phase on emulsification of the concentrate, and forms a solid or semi-solid matrix to prevent coalescence of the emulsion particles.

2. A composition as claimed in claim 1 wherein the polymeric material comprises ethyl cellulose.

3. A composition as claimed in claim 2 wherein the ethyl cellulose has an ethoxy group content of from 2.0 to 2.6 ethoxy units per anhydroglucose unit.

4. A composition as claimed in claim 3 wherein the ethyl cellulose has an ethoxy group content of from 2.25 to 2.58 ethoxy units per anhydroglucose unit.

5. A composition as claimed in any one of claims 1 to 4, wherein the agriculturally effective compound is a pesticide.

6. A composition as claimed in claim 5, wherein the pesticide is an acyl urea.

7. A composition as claimed in claim 6, wherein the acyl urea is a compound of the formula

$$R.\ CO.\ NH.\ CX.\ NH.\ R' \qquad (I)$$

X is Oxygen or Sulphur, and R and R′ are each independently an optionally substituted aromatic or heteroaromatic group.

8. A composition as claimed in claim 7, wherein R is an optionally substituted phenyl or an optionally substituted pyridyl group.

9. A composition as claimed in claim 7 or claim 8, wherein R′ is an optionally substituted phenyl, optionally substituted pyridyl, or optionally substituted pyrizinyl group.

10. A composition as claimed in claim 7, wherein R and R′ are each independently, an optionally substituted phenyl group.

11. A composition as claimed in claim 7, wherein the acyl urea is:—

1-[4-(2,2-dichloro-1,1-difluoroethoxy)phenyl]-3-(2-chlorobenzoyl urea,

1-(4-trifluoromethoxyphenyl)-3-(2-chlorobenzoyl urea,

1-(4-chlorophenyl)-3-(2,6-difluorobenzoyl) urea,

1-[3,5-dichloro-4-(2-chloro-1,1-difluoroethoxy)phenyl]-3-(2,6-difluorobenzoyl) urea,

1-[3,5-dichloro-4-(2,2-dichloro-1,1-difluoroethoxy)phenyl]-3-(2-chlorobenzoyl) urea,

1-[3,5-dichloro-4-((5-trifluoromethyl)-3-chloro-2-pyridyloxy)-phenyl]-3-(2,6-difluorobenzoyl) urea,

1-[3,5-dichloro-4-(1,1,2,2-tetrafluoroethoxy)-phenyl]-3-(2,6-difluorobenzoyl) urea.

12. A composition as claimed in any one of claims 1 to 5 wherein the agriculturally effective compound is a herbicide.

13. A composition as claimed in any one of the preceding claims, comprising an additional pesticide component.

14. A composition as claimed in claim 13, wherein the additional pesticide component includes an organophosphorus, a pyrethroid or a carbamate insecticide.

15. A composition as claimed in claim 14, wherein the additional pesticide is chlorpyrifos, chlorpyrifos-methyl, or cypermethrin.

16. A composition as claimed in any one of the preceding claims, wherein the polar solvent is N-methylpyrrolidone, dimethylformamide, dimethylsulphoxide, isophorone, cyclohexanone, acetone, or a mixture of two or more thereof.

17. A composition as claimed in claim 16, wherein the polar solvent is N-methylpyrrolidone.

18. A composition as claimed in any one of the preceding claims wherein the non-polar solvent is xylene, dioctyl phthallate, a chlorinated hydrocarbon, an aliphatic hydrocarbon, a mineral oil, a polybutene, a glycol ether, or a combination of two or more thereof.

19. A composition as claimed in any one of the preceding claims, wherein the emulsifier is such as to produce an emulsion having an average droplet size not exceeding 5 microns.

20. A composition as claimed in any one of the preceding claims comprising one or more argronomically acceptable diluents.

21. A method of preparing an agriculturally effective composition, which process comprises emulsifying a composition as claimed in any one of the preceding claims with water.

22. A method of killing or controlling pests or weeds which method comprises applying to the pests or weeds or to the locus of the pests or weeds a composition prepared by a method as claimed in claim 21.

**Patentansprüche**

1. Emulgierbare konzentrierte Zusammensetzung, umfassend eine mischbare Kombination eines polaren und eines nicht-polaren Lösungsmittels, eine landwirtschaftlich wirksame Verbindung, die höchstens nur gering in Wasser löslich ist, die aber in der Kombination von polarem und nicht polarem Lösungsmittel löslich ist, mindestens einen Emulgator, wobei der Emulgator von solcher Art ist und in solcher Menge vorhanden ist, daß er eine Emulgierung des Konzentrats mit Wasser bewirkt oder erlaubt und die Bildung einer Emulsion mit einer 10μ nicht überschreitenden durchschnittlichen Tröpfchengroße, dadurch gekennzeichnet, daß die Zusammensetzung auch ein polymeres Material enthält, das Ethylcellulose, Ethylhydroxy-ethylcellulose oder Celluloseacetat-butyrat ist, daß das polare Lösungsmittel eines ist, in dem das polymere Material löslich ist und daß das polymere Material und das polare Lösungsmittel in solchen Mengen vorhanden sind, daß das polymere Material bei der Emulgierung des Konzentrats in der dispergierten Phase bleibt und eine feste oder halbfeste Matrix bildet, um die Koaleszenz der Emulsionsteilchen zu verhindern.

2. Zusammensetzung nach Anspruch 1, worin das polymere Material Ethylcellulose umfaßt.

3. Zusammensetzung nach Anspruch 2, worin die Ethylcellulose einen Ethoxygruppengehalt von 2,0 bis 2,6 Ethoxyeinheiten pro Anhydroglucoseeinheit hat.

4. Zusammensetzung nach Anspruch 3, worin die Ethylcellulose einen Ethoxygruppengehalt von 2,25 bis 2,58 Ethoxyeinheiten pro Anhydroglucoseeinheit hat.

5. Zusammensetzung nach einem de Ansprüche 1 bis 4, worin die landwirtschaftlich wirksame Verbindung ein Pestizid ist.

6. Zusammensetzung nach Anspruch 5, worin das Pestizid ein Acylharnstoff ist.

7. Zusammensetzung nach Anspruch 6, worin der Acylharnstoff eine Verbindung der Formel

$$R—CO—NH—CX—NH—R' \qquad (I)$$

ist, X Sauerstoff oder Schwafel ist und R und R′ unabhängig voneinander eine gegebenenfalls substituierte aromatische oder heteroaromatische Gruppe sind.

8. Zusammensetzung nach Anspruch 7, worin R eine gegebenenfalls substituierte Phenyl- oder gegebenenfalls substituierte Pyridylgruppe ist.

9. Zusammensetzung nach Anspruch 7 oder Anspruch 8, worin R′ eine gegebenenfalls substituierte Phenyl-, gegebenenfalls substituierte Pyridyl- oder gegebenenfalls substituierte Pyrizinylgruppe ist.

10. Zusammensetzung nach Anspruch 7, worin R und R′ unabhängig voneinander eine gegebenenfalls substituirte Phenylgruppe sind.

11. Zusammensetzung nach Anspruch 7, worin der Acylharnstoff:

1-[4-(2,2-Dichlor-1,1-difluorethoxy)phenyl]-phenyl-3-(2-chlorbenzoyl-harnstoff,
1-(4-Trifluormethoxyphenyl)-3-(2-chlorbenzoyl-harnstoff,
1-(4-Chlorphenyl)-3-(2,6-difluorbenzoyl)-harnstoff,
1-[3,5-Dichlor-4-(2-chlor-1,1-difluorethoxy)phenyl]-3-(2,6-difluorbenzoyl)-harnstoff,
1-[3,5-Dichlor-4-(2,2-dichlor-1,1-difluorethoxy)phenyl]-3-(2-chlorbenzoyl)-harnstoff
1-[3,5-Dichlor-4-((5-trifluormethyl)-3-chlor-2-pyridyloxy)-phenyl]-3-(2,6-difluorbenzoyl)-harnstoff,
1-[3,5-Dichloro-4-(1,1,2,2-tetrafluorethoxy)-phenyl]-3-(2,6-difluorbenzoyl)-harnstoff ist.

12. Zusammensetzung nach einem der Ansprüche 1 bis 5, worin die landwirtschaftlich effektive Verbindung ein Herbizid ist.

13. Zusammensetzung nach einem der vorhergehenden Ansprüche, umfassend eine zusätzliche Pestizid-Komponente.

14. Zusammensetzung nach Anspruch 13, worin die zusätzliche Pestizid-Komponente ein Organophosphor-, Pyrethroid- oder Carbamat-Insektizid einschließt.

15. Zusammensetzung nach Anspruch 14, worin das zusätzliche Pestizid Chlorpyriphos, Chlorpyriphosmethyl oder Cypermethrin ist.

16. Zusammensetzung nach einem der vorhergehenden Ansprüche, worin das polare Lösungsmittel N-Methylpyrrolidon, Dimethylformamid, Dimethylsulfoxid, Isophoron, Cyclohexanon, Aceton oder eine

Mischung von zwei oder mehreren davon ist.

17. Zusammensetzung nach Anspruch 16, worin das polare Lösungsmittel N-Methylpyrrolidon ist.

18. Zusammensetzung nach einem der vorhergehenden Ansprüche, worin das nicht polar Lösungsmittel Xylol, Dioctylphthalat, ein chlorierter Kohlenwasserstoff, ein aliphatischer Kohlenwasserstoff, ein Mineralöl, ein Polybuten, ein Glykol- ether oder eine Kombination von zwei oder mehreren davon ist.

19. Zusammensetzung nach einem der vorhergehenden Ansprüche, worin der Emulgator so ist, daß er eine Emulsion mit einer durchschnittlichen Teilchengröße, die 5 µm nicht überschreitet, liefert.

20. Zusammensetzung nach einem der vorhergehenden Ansprüche, umfassend eines oder mehrere agrononmisch annehmbare Verdünnungsmittel.

21. Verfahren zur Herstellung einer landwirtschaftlich wirksamen Zusammensetzung, umfassend das Emulgieren einer Zusammensetzung nach einem der vorhergehenden Ansprüche mit Wasser.

22. Verfahren zum Töten oder zur Kontrolle von Ungeziefer oder Unkräutern, umfassend das Anwenden eine Zusammensetzung, hergestellt nach einem Verfahren nach Anspruch 21 das Ungeziefer oder die Unkräuter oder den Ort der Ungeziefer oder Unkräuter.

**Revendications**

1. Composition de concentré émulsionnable, cette composition comprenant

un combinaison miscible d'un solvant polaire et d'un solvant non polaire;

un composé efficace en agriculture qui est au plus peu soluble dans l'eau, mais qui est soluble dans la combinaison des solvants polaire et non polaire;

au moins un émulsifiant, cet émulsifiant étant de nature telle et présent en une quantité telle qu'il provoque ou permet, par émulsionnement du concentré avec de l'eau, la formation d'une emulsion ayant une taille moyenne de goutte-lettes ne dépassant pas 10 µm,

caractérisée en ce que la composition comprend aussi

une matière polymère, qui est l'éthylcellulose, l'éthylhydroxyéthylcellulose ou l'acétobutyrate de cellulose, en ce que le solvant polaire est un solvant dans lequel ladite matière polymère est soluble et en ce que ladite matière polymère et ledit solvant polaire sont présents en quantités telles que la matière polymère reste dans la phase dispersée lors de l'émulsionnement du concentré et forme une matrice solide ou semi-solide pour empêcher la coalescence des particules dans l'émulsion.

2. Composition selon la revendication 1, dans laquelle la matière polymère comprend l'éthylcellulose.

3. Composition selon la revendication 2, dans laquelle l'éthylcellulose a une teneur en groupes éthoxy de 2,0 à 2,6 motifs éthoxy par motif anhydroglucose.

4. Composition selon la revendication 3, dans laquelle l'éthylcellulose a une teneur en groupes éthoxy de 2,25 à 2,58 motifs éthoxy par motif anhydroglucose.

5. Composition selon l'une quelconque des revendications 1 a 4, dans laquelle le composé efficace en agriculture est un pesticide.

6. Composition selon la revendication 5, dans laquelle le pesticide est une acylurée.

7. Composition selon la revendication 6, dans laquelle l'acylurée est un composé de formule

$$R—CO—NH—CX—NH—R' \qquad (I)$$

X est un atome d'oxygène ou de soufre et R et R' sont chacun indépendamment un groupe aromatique ou hétéroaromatique éventuellement substitué.

8. Composition selon la revendication 7, dans laquelle R est un groupe phényle éventuellement substitué ou un grope pyridyle éventuellement substitué.

9. Composition selon la revendication 7 ou 8, dans laquelle R' est un groupe phényle éventuellement substitué, un groupe pyridyle éventuellement substitué ou un groupe pyrazinyle éventuellement substitué.

10. Composition selon la revendication 7, dans laquelle R et R' sont chacun indépendamment un groupe phényle éventuellement substitué.

11. Composition selon la revendication 7, dans laquelle l'acylurée est:

la 1-[4-(2,2-dichloro-1,1-difluoroéthoxy)phényl]-3-(2-chlorobenzoyl urée,

la 1-(4-trifluorométhoxyphényl)-3-(2-chlorobenzoylurée,

la 1-(4-chlorophényl)-3-(2,6-difluorobenzoyl)urée,

la 1-[3,5-dichloro-4-(2-chloro-1,1-difluoroéthoxy)phényl]-3-(2,6-difluorobenzoyl)urée,

la 1-[3,5-dichloro-4-(2,2-dichloro-1,1-difluoroéthoxy)phényl]-3-(2-chlorobenzoyl)urée,

la 1-[3,5-dichloro-4-((5-trifluorométhyl)-3-chloro-2-pyridyloxy)-phényl]-3-(2,6-difluorobenzoyl)urée,

la 1-[3,5-dichloro-4-(1,1,2,2-tétrafluoroéthoxy)-phényl]-3-(2,6-difluorobenzoyl)urée.

12. Composition selon l'une quelconque des revendications 1 à 5, dans laquelle le composé efficace en agriculture est un herbicide.

13. Composition selon l'une quelconque des revendications précédentes, comprenant un constituant pesticide supplémentaire.

14. Composition selon la revendication 13, dans laquelle le constituant pesticide supplémentaire renferme un insecticide de type organophosphoré, pyréthroïde ou carbamate.

15. Composition selon la revendication 14, dans laquelle le pesticide supplémentaire est le chlorpyrifos, le chlorpyrifus-méthyl ou la cyperméthrine.

16. Composition selon l'une quelconque des revendications précédentes, dans laquelle le solvant polaire est la N-méthylpyrrolidone, le diméthylformamide, le diméthylsulfoxyde, l'isophorone, la cyclohexanone, l'acétone ou un mélange de deux d'entre eux ou plus.

17. Composition selon la revendication 16, dans laquelle le solvant polaire est la N-méthylpyrrolidone.

18. Composition selon l'une quelconque des revendications précédentes, dans laquelle le solvant non polaire est le xylène, le phtalate de dioctyle, un hydrocarbone chloré, un hydrocarbure aliphatique, une huile minérale, un polybutène un éther de glycol ou un combinaison de deux d'entre eux ou plus.

19. Composition selon l'une quelconque des revendications précédentes, dans laquelle l'émulsifiant est tel qu'il produit une émulsion ayant une taille moyenne de gouttelettes ne dépassant pas 5 µm.

20. Composition selon l'une quelconque des revendications précédentes, comprenant un ou plusieurs diluants agronomiquement acceptables.

21. Procédé de préparation d'une composition efficace en agriculture, ce procédé comprenant, l'émulsionnement, avec de l'eau, d'une composition selon l'une quelconque des revendications précédentes.

22. Procédé pour détruire ou combattre les insectes nuisibles ou les mauvaises herbes, ce procédé comprenant l'application, aux insectes nuisibles ou aux mauvaises herbes ou aux lieux de fréquentation des animaux nuisibles ou des mauvaises herbes, d'une composition préparée par un procédé selon la revendication 21.